# EUROPEAN PATENT SPECIFICATION

(11) **EP 1 336 737 B1**
(45) Date of publication and mention of the grant of the patent: **11.06.2008**
(21) Application number: 03003337.7
(22) Date of filing: 13.02.2003
(51) Int. Cl.: F02B 37/14

(54) **Supercharge pressure control apparatus and method**
Vorrichtung und Verfahren zum Regeln eines Aufladedruckes
Dispositif et procédé de commande de pression de suralimentation

(30) Priority: 18.02.2002 JP 2002040551
(43) Date of publication of application: 20.08.2003
(73) Proprietor: Toyota Jidosha Kabushiki Kaisha, Toyota-shi, Aichi-ken, 471-8571 (JP)
(72) Inventor: Masuda, Kei, c/o Toyota Jidosha Kabushiki Kaisha, Toyota-shi, Aichi-ken, 471-8571 (JP); Akita, Koichi, c/o Toyota Jidosha Kabushiki Kaisha, Toyota-shi, Aichi-ken, 471-8571 (JP); Igarashi, Osamu, c/o Toyota Jidosha Kabushiki Kaisha, Toyota-shi, Aichi-ken, 471-8571 (JP); Hashimoto, Hiromasa, c/o Toyota Jidosha Kabushiki Kaisha, Toyota-shi, Aichi-ken, 471-8571 (JP); Kanba, Chika, c/o Toyota Jidosha Kabushiki Kaisha, Toyota-shi, Aichi-ken, 471-8571 (JP); Sasaki, Shoji, c/o Toyota Jidosha Kabushiki Kaisha, Toyota-shi, Aichi-ken, 471-8571 (JP)
(74) Representative: TBK-Patent

(56) References cited:
- EP-A- 0 311 457
- US-A- 4 505 117
- US-A- 4 774 811
- US-A- 4 903 488
- US-A- 5 076 060
- US-A- 5 400 597

## Description

The invention relates to a turbocharger system and method for controlling the supercharge pressure through the use of an electric motor-equipped turbocharger in which the turbocharger turbine can be driven by an electric motor.

The technology for achieving high output (or high fuel efficiency) of an internal combustion engine by supercharging intake air into the engine through the use of a turbocharger has conventionally been employed. An aspect of the turbocharger technology in which improvement is desired is that the rising of supercharge pressure in a low revolution speed range is poor, and therefore the engine output characteristic in the low revolution speed range is not very good. In view of the principle of the turbocharger technology that intake air is supercharged by using exhaust energy, the aforementioned drawback is a phenomenon that normally occurs in a low revolution speed range due to low exhaust energy. In order to overcome the drawback, a twin-turbocharger arrangement is often adopted. As another measure, incorporation of an electric motor for a turbine has been attempted wherein the turbine is forcibly driven by the motor so as to produce a desired supercharge pressure. This arrangement also allows the electric motor to perform regenerative power generation using exhaust energy. Such an electric motor-equipped turbocharger is described in, for example, Japanese Patent Application Laid-Open Publication No. 8-182382. This document describes a turbocharger system comprising the features of claim 1 and a supercharge pressure control method comprising the steps of claim 12.

In the electric motor-equipped turbocharger described in the aforementioned laid-open patent application, the amount of change in the supercharge pressure to be caused by the electric motor is determined based on comparison of the actual supercharge pressure with a target supercharge pressure. However, if plurality of means are provided for changing the supercharge pressure, there is a danger of interference between the supercharge pressure changing control performed by the electric motor and other supercharge pressure changing controls. Improvement in this respect is needed in the turbocharger described in the aforementioned laid-open patent application. Examples of the aforementioned other supercharge pressure changing controls include an intake-side air bypass valve control, a waste gate valve control, a variable nozzle control in a variable nozzle turbocharger, an A/R variable control in an A/R variable mechanism, etc.

EP 0 311 457 A discloses a turbocharger system of an internal combustion engine, comprising a turbocharger, an electric motor as first supercharge pressure changing means for rotating a compressor of the turbocharger for performing a supercharge pressure control, and second supercharge pressure changing means, wherein said first supercharge pressure changing means control the supercharge pressure based on comparison of an actual supercharge pressure with a target supercharge pressure, wherein said supercharge pressure control means performs an operation region determination as to whether a operation state of the engine is in a specific operation region and if it is determined that the operation state of the engine is outside the specific operation region, the supercharge pressure control means prohibits the supercharge pressure control by the first supercharge pressure changing means.

US 4 774 811 A discloses an electric machine coupled to a turbocharger for supercharging air supplied to an engine. The turbocharger is primarily driven by exhaust gas from the engine. Additionally, the electric machine can be controlled such that it drives the turbocharger in a state of insufficient exhaust gas from the engine for driving the turbocharger.

The turbocharger of US 5 400 597 A discloses a compressor wheel and two turbine wheels all mounted on a common drive shaft. Furthermore it discloses an auxiliary airflow generator to turn one or both turbine wheels. If the exhaust gas from the engine is insufficient for driving the turbine wheel as necessary, for example in a turbo lag, the auxiliary airflow generator additionally drives one or both turbine wheels.

It is an object of the invention to provide a supercharge pressure control apparatus which has an electric motor for driving a compressor of a turbocharger, and supercharge pressure changing means other than the electric motor, and which is capable of contributing to improvements in output characteristics and fuel economy by controlling the supercharge pressure without allowing interference of the control performed by the electric motor and the controls performed by the other supercharge pressure changing means.

This object is solved by a supercharge pressure control apparatus according to claims 1. Advantageous further developments are subject to the dependent claims.

The foregoing object and features and advantages of the invention will become apparent from the following description of preferred embodiments with reference to the accompanying drawings, wherein like numerals are used to represent like elements and wherein:

**FIG. 1** is a diagram illustrating the construction of an engine equipped with a turbocharger system in accordance with the invention;

**FIG. 2** is a flowchart illustrating a basic control of a supercharge pressure control;

**FIG. 3** indicates a map for determining a supercharge pressure increase that is provided by an electric motor;

**FIG 4** indicates a map for determining an instruction value that is output to a controller of the electric motor; and

**FIG. 5** is a flowchart illustrating a surge avoiding control.

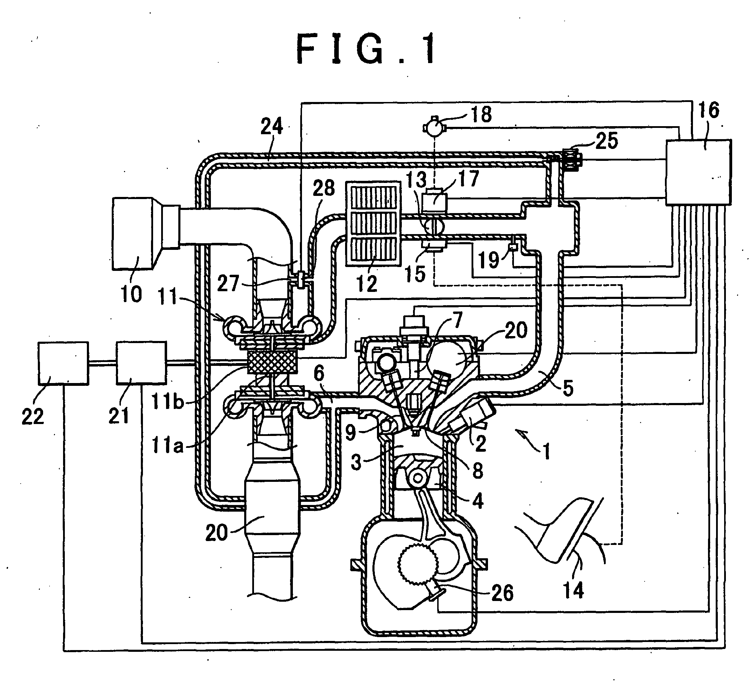

A preferred embodiment of the turbocharger system of the invention will be described below. **FIG. 1** shows an engine 1 equipped with a turbocharger system in accordance with this embodiment. The engine 1 described herein is a direction injection type gasoline engine. However, the embodiment is also applicable to a type of gasoline engine in which fuel is injected into an intake passageway, diesel engines, etc.

The term "supercharge pressure" sometimes means the differential pressure with respect to the atmospheric pressure. In some other cases, the term "supercharge pressure" means the absolute pressure in an intake pipe. Hereinafter, where there is a need to distinguish between the two meanings of the term, description will be made to clarify the meaning. For example, if supercharge pressure control is performed based on the output of a pressure sensor for detecting the intake pipe pressure, the supercharge pressure control can easily be performed based on the supercharge pressure as the difference from the atmospheric pressure in a case where the pressure sensor is a sensor that detects differential pressure with respect to the atmospheric pressure. However, in a case where the pressure sensor is a sensor that detects absolute pressure, it will be easier to perform the supercharge pressure control based on the supercharge pressure as the absolute intake pipe pressure.

The engine 1 in this embodiment is a multi-cylinder engine although only one of the cylinders is shown in a sectional view in FIG 1. The engine 1 is a type of engine in which fuel is injected from an injector 2 toward a top surface of a piston 4 within a cylinder 3. The engine 1 is a generally termed lean-burn engine capable of stratified charge combustion. By conducting lean-burn combustion while supercharging intake air through the use of a turbocharger, the engine 1 is able to achieve improved fuel efficiency as well as increased engine output.

In the engine 1, air taken into the cylinder 3 via an intake passageway 5 is compressed by the piston 4, and fuel is injected into a recess formed on the top surface of the piston 4, thereby forming a rich mixture of fuel and air around an ignition plug 7. The mixture is ignited by the ignition plug 7 for combustion. Communication between the interior of the cylinder 3 and the intake passageway 5 is opened and closed by an intake valve 8. Exhaust gas produced as a result of combustion is discharged into an exhaust passageway 6. Communication between the interior of the cylinder 3 and the exhaust passageway 6 is opened and closed by an exhaust valve 9. An air cleaner 10, a turbocharger unit 11, an intercooler 12, a throttle valve 13, etc., are disposed in that order from an upstream side in the intake passageway 5.

The air cleaner 10 is a filter that removes dirt and dust from intake air. The turbocharger unit 11 is disposed between the intake passageway 5 and the exhaust passageway 6, and performs supercharging. In the turbocharger unit 11 in accordance with the embodiment, a turbine-side impellor and a compressor-side impellor are connected by a rotation shaft (hereinafter, this portion will be simply referred to as "turbine/compressor 11a"). The turbocharger in accordance with the embodiment is an electric motor-equipped turbocharger in which an electric motor 11b is incorporated so that the rotation shaft of the turbine/compressor 11a is an output shaft of the electric motor 11b. The electric motor 11b is an AC motor that can also serves as a generator. The turbocharger unit 11 can function as an ordinary supercharger that performs supercharging by using only exhaust energy, and also can perform enhanced supercharging by using the electric motor 11b to forcibly drive the turbine/compressor 11a.

Furthermore, the turbocharger unit 11 allows the electric motor 11b to be rotated by exhaust energy via the turbine/compressor 11a so as to perform regenerative power generation, and thereby recovers generated electric power. Although not shown, the electric motor 11b has, as major components, a rotor fixed to the rotation shaft of the turbine/compressor 11a, and a stator disposed around the rotor. Disposed on the intake passageway 5 downstream of the turbocharger unit 11 is the air-cooled intercooler 12 for reducing the temperature of intake air that has been heated with the pressure rise caused by the supercharging operation of the turbocharger unit 11. Due to the temperature reduction of intake air by the intercooler 12, the air charging efficiency improves.

The throttle valve 13 for adjusting the amount of intake air is disposed downstream of the intercooler 12. The throttle valve 13 in this embodiment is a generally termed electronically controlled throttle valve. The degree of opening of the throttle valve 13 is determined by an ECU 16 on the basis of the amount of operation of an accelerator pedal 14 and other information quantities. The amount of operation the accelerator pedal 14 is detected by an accelerator positioning sensor 15. The throttle valve 13 is opened and closed by a throttle motor 17 that is disposed near the throttle valve 13. The throttle valve 13 is also provided with a throttle positioning sensor 18 for detecting the degree of opening of the throttle valve 13.

A pressure sensor 19 for detecting the pressure in the intake passageway 5 (intake pressure) is disposed downstream of the throttle valve 13. The sensors 15, 18, 19 are connected to the ECU 16, and output detection results to the ECU 16. The ECU 16 is an electronic control unit that has a CPU, a ROM, a RAM, etc. The ECU 16 is connected to the injector 2, the ignition plug 7, the electric motor 11b, etc., which are controlled by signals from the ECU 16. The ECU 16 is further connected to a variable valve timing mechanism 20 for controlling the open-close timing of the intake valve 8, a controller 21 connected to the electric motor 11b, a battery 22, etc.

The controller 21 not only controls the driving of the electric motor 11b, but also performs a function as an inverter for voltage transformation of power regenerated by the electric motor 11b. The regenerated power is stored into the battery 22 after being subjected to voltage transformation by the controller 21. Further provided on the intake passageway 5 is a bypass 27 that connects an upstream side and a downstream side of the turbocharger unit 11 (compressor). The bypass 27 is provided with an air bypass valve 28 for controlling the communication through the bypass 27. The air bypass valve 28 in this embodiment is electrically controlled to open and close by a signal from the ECU 16. However, the air bypass valve 28 may also be a mechanical one-way valve that opens when the pressure downstream of the compressor becomes higher than the pressure upstream of the compressor by a predetermined pressure value.

An emission control catalyst 23 for purification of exhaust gas is attached to the exhaust passageway 6 downstream of the turbocharger unit 11. An EGR (exhaust gas recirculation) passageway 24 for returning exhaust gas from the exhaust passageway 6 (a portion upstream of the turbocharger unit 11) to the intake passageway 5 (a surge tank portion formed downstream of the pressure sensor 19) is provided. The EGR passageway 24 is provided with an EGR valve 25 for adjusting the amount of exhaust gas recirculated. The degree of opening of the EGR valve 25 is also controlled by the ECU 16.

A rotation speed sensor 26 for detecting the engine rotation speed is disposed near a crankshaft of the engine 1. Although not shown, the turbocharger unit 11 in this embodiment is a generally termed variable nozzle turbocharger as well. The variable nozzle turbocharger has a plurality of movable vanes disposed in a nozzle portion provided at an outward position in the exhaust-side turbine/compressor 11a, and is therefore capable of variable control of the amount of flow of exhaust gas from the turbine nozzle toward the turbine/compressor 11a. The supercharge pressure can also be changed by controlling the variable nozzle.

An actuator for driving the variable nozzle is connected to the ECU 16, and is controlled by the ECU 16.

Although not shown, a passageway that bypasses the turbocharger unit 11 is connected to the exhaust passageway 6. This bypass passageway is provided with a waste gate valve. When the supercharge pressure reaches at least a predetermined pressure, the waste gate valve is opened so as to control the supercharge pressure by reducing the amount of flow of exhaust to the turbine/compressor 11a. The waste gate valve in this embodiment is of a passive type that is opened and closed through the use of intake pressure. However, the waste gate valve may instead be a solenoid valve or the like that is actively controlled to open and close by the ECU 16.

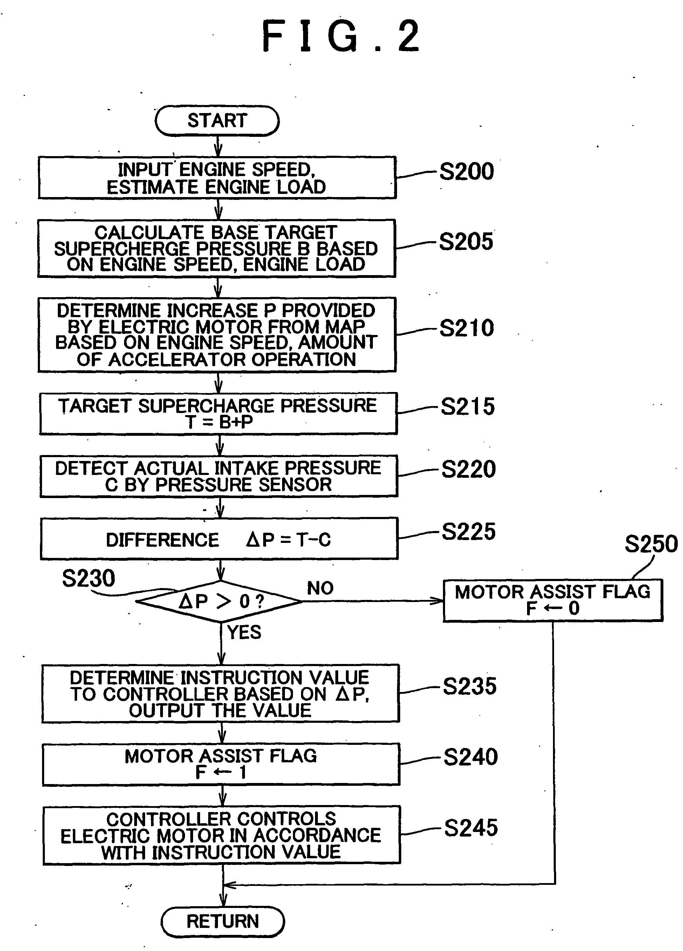

A basic portion of the supercharge pressure control using the electric motor 11b will be described below. FIG. 2 is a flowchart illustrating the basic portion of the control. The control illustrated by the flowchart of FIG. 2 is repeatedly executed at every predetermined time (e.g., every 32 ms).

First, the engine rotation speed is detected by the rotation speed sensor 26, and the engine load is estimated from the amount of intake air (that is estimated based on the pressure sensor 19) and the degree of throttle opening (that is detected by the throttle positioning sensor 18) (step 200). Then, from the engine rotation speed and the engine load, a base target supercharge pressure B is computed (step 205). The base target supercharge pressure B is a supercharge pressure expected at the time of a predetermined engine rotation speed and a predetermined engine load during a steady operation, and is acquired beforehand through experiments or the like, and is pre-stored as a map in the ROM of the ECU 16. The control of the variable nozzle is performed on the basis of the base target supercharge pressure B.

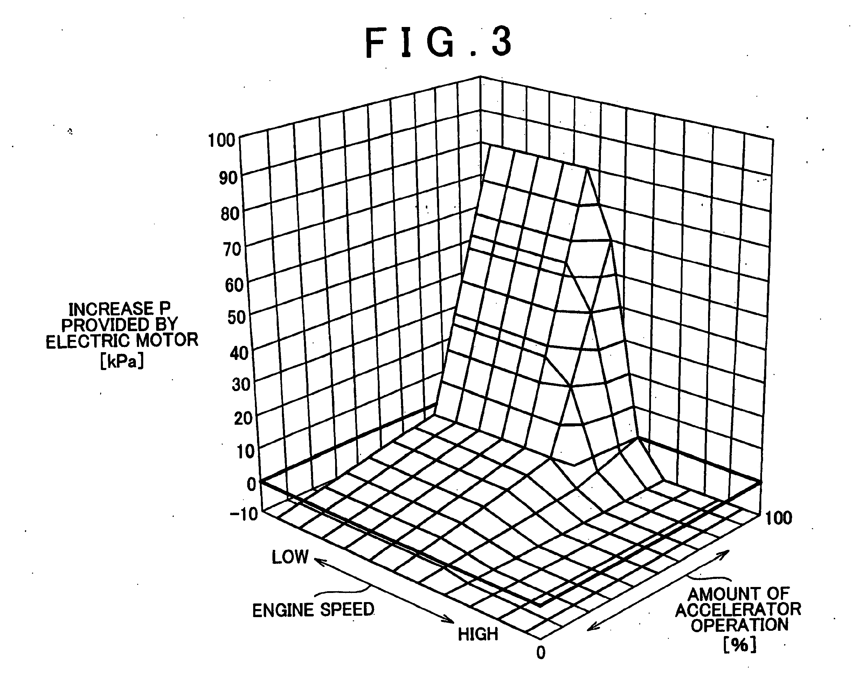

Next, the supercharge pressure increase P to be provided by the electric motor 11b is determined on the basis of the engine rotation speed detected by the rotation speed sensor 26 and the amount of accelerator operation detected by the accelerator positioning sensor 15 (step 210). A relationship among the engine rotation speed, the amount of accelerator operation and the supercharge pressure increase P is determined beforehand through experiments or the like, and is pre-stored as a map in the ROM of the ECU 16. This map is indicated in FIG. 3. As indicated in FIG. 3, a region where the engine rotation speed is less than or equal to a predetermined speed and the amount of accelerator operation is greater than or equal to a predetermined amount is set as a specific operation region. Only when the engine 1 is operated within the specific operation region, the supercharge pressure increase P is set as a positive value, and assist using the electric motor 11b is performed. In the specific operation region, the supercharge pressure increase P increases with decreasing engine rotation speed, and with increasing amount of accelerator operation.

If the state of the engine 1 is outside the specific operation region, the supercharge pressure increase P is set at a negative value instead of zero, whereby the assist using the electric motor 11b is substantially prohibited. The meaning of the setting of the supercharge pressure increase P at a negative value will be described below. After step 210, a target supercharge pressure T is calculated by adding the supercharge pressure increase P provided by the electric motor 11b to the base target supercharge pressure B (step 215). Next, the intake pipe pressure is detected as an actual supercharge pressure C by the pressure sensor 19 (step 220). Then, a difference ΔP between the target supercharge pressure T and the detected actual supercharge pressure C is calculated (step 225).

It is determined whether the calculated difference ΔP is greater than "0" (step 230). If the difference ΔP is not greater than "0", an assist flag F indicating the presence/absence of the assist by the electric motor 11b is set at "0", and the flow illustrated in FIG. 2 is temporarily exited without the supercharge assist by the electric motor 11b. If the difference AP is less than or equal to "0", the supercharge by the electric motor 11b is not performed regardless of whether the supercharge pressure increase P is a positive value. If the determination at step 230 is affirmative, that is, if the difference ΔP is greater than "0", an instruction value for performing the supercharge assist by the electric motor 11b is determined on the basis of the difference ΔP, and the instruction value is output to the controller 21 (step 235).

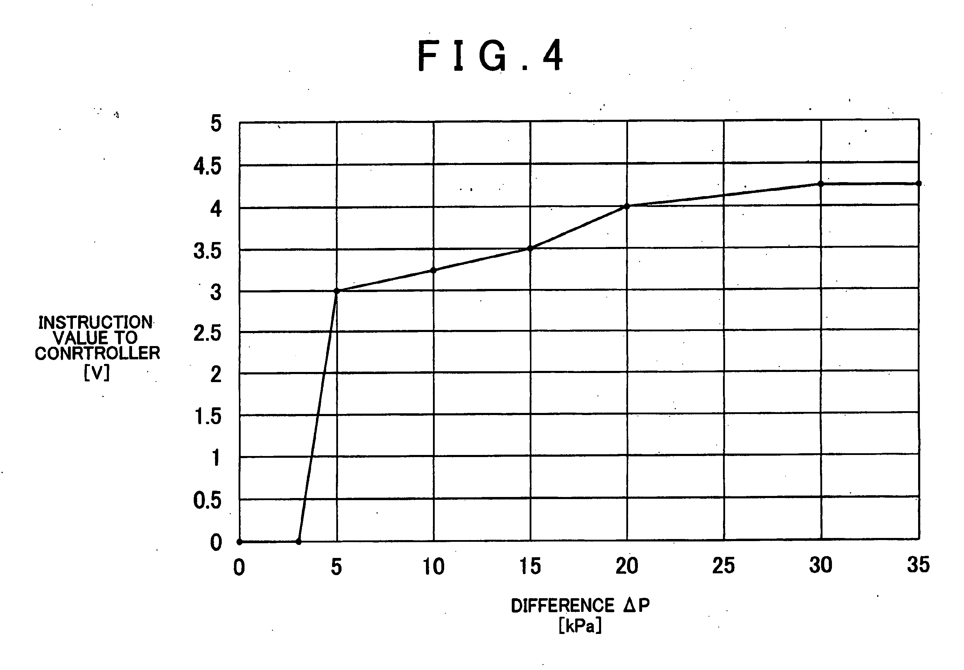

FIG. 4 indicates a relationship between the difference ΔP and the instruction value sent to the controller 21. As indicated in FIG. 4, the instruction value to the controller 21 is provided in the form of a voltage value. If the difference ΔP is greater, a greater voltage value is sent to the controller 21. The range of the voltage value herein is the range of 0 to 4.3 V. If the voltage of 4.3 V is sent to the controller 21, the controller 21 performs full assist of supercharge by fully operating the electric motor 11b. After the instruction value is output to the controller 21, the assist flag F is set to "1" (step 240). Subsequently, the controller 21 controls the electric motor 11b based on the instruction value received by the controller 21 (step 245).

In this embodiment, the controller 21 outputs an electric current determined from the supplied instruction value to the electric motor 11b. The electric motor 11b changes the output torque in accordance with the supplied electric current, and is controlled via the output current. In this embodiment, the current based on the instruction value is supplied to the electric motor 11b, and feedback control of the electric motor 11b is not performed. After that, the control illustrated by the flowchart of FIG. 2 is repeatedly performed, so that the value of electric current supplied to the electric motor 11b changes. It is to be noted that feedback control of the electric motor 11b may be performed. For example, it is possible to adopt a construction in which the turbine/compressor 11a is provided with a rotation speed sensor, and feedback control of the current supplied to the electric motor 11b is performed on the basis of the turbine rotation speed.

Due to the supercharge performed by the electric motor 11b as described above, insufficient supercharge pressure in the low rotation speed range is offset, and the rising of supercharge pressure improves. The output increase and the efficiency improvement achieved by the turbocharger unit can be enjoyed from the low rotation speed range to a high rotation speed range. In this embodiment, the supercharge pressure control performed by the variable nozzle mechanism is provided with higher priority than the supercharge pressure control performed by the electric motor 11b. Therefore, since the priority sequence of the two supercharge pressure controls is set, the two supercharge pressure controls do not interfere with each other, so that stable control of supercharge pressure can be realized.

The variable nozzle mechanism is controlled based on the base target supercharge pressure B, whereas the electric motor 11b is controlled based on the target supercharge pressure T obtained by adding the supercharge pressure increase P to the base target supercharge pressure B. Thus, the controls of the two members are provided with different targets (control maps). Therefore, even if the assist by the electric motor 11b should become excessive, the other supercharge pressure control, independent of the assist by the electric motor 11b, will not become ineffective. In this respect, too, interference between the two supercharge pressure controls is unlikely. The supercharge pressure control by the variable nozzle mechanism in this embodiment is a known supercharge pressure control, such as a PID feedback control or the like, due to the relationship with the actual supercharge pressure C.

Furthermore, in this embodiment, the supercharge pressure control by the electric motor 11b is substantially prohibited if the operation region is outside the specific operation region. Therefore, unnecessary electric power consumption is reduced, and operation with good energy efficiency can be realized. Further, in this embodiment, the specific operation region is a sharp acceleration state. Specifically, the sharp acceleration state is set as a state where the engine rotation speed is less than or equal to a predetermined speed, and the amount of accelerator operation is greater than or equal to a predetermined amount.

Furthermore, if the present operation region is outside the specific operation region, the supercharge pressure increase P is set at a negative value, as mentioned above. Due to this manner of setting, the target supercharge pressure T is calculated as a reduced value, so that the difference ΔP is also calculated as a reduced value. The determination regarding whether to perform the supercharge pressure control by the electric motor 11b is made based on the magnitude of the difference ΔP. Therefore, a smaller difference ΔP calculated means that execution of the supercharge pressure control by the electric motor 11b becomes unlikely. Since the difference ΔP is a difference between the relatively small calculated target supercharge pressure T and the actual supercharge pressure C, a certain width of fluctuation with respect to the actual supercharge pressure C is secured in the determination as to whether the supercharge pressure control by the electric motor 11b is needed.

Therefore, the supercharge pressure control by the electric motor 11b is unlikely to be executed in a situation where the assist by the electric motor 11b is not desired, for example, a situation where the actual supercharge pressure C merely fluctuates due to an external disturbance or the like. Thus, supercharge pressure control can be stably performed. For example, in a case where the actual supercharge pressure C changes in a fashion of repeated small increases and decreases, the supercharge pressure control will become rather rough if the start and stop of the supercharge performed by the electric motor 11b is frequently repeated. That is, unnecessary supercharge pressure control by the electric motor 11b is performed. Therefore, setting is made such that the supercharge by the electric motor 11b is unlikely to be started when the supercharge by the electric motor 11b is considered unnecessary (outside the specific operation region).

Furthermore, if the electric motor 11b is used as a generator, electric energy can be recovered. During recovery of electric power from the electric motor 11b, the electric motor 11b retards rotation of the turbine/compressor 11a. That is, the electric motor 11b not only increases the rotation speed of the turbine/compressor 11a by consuming electric energy, but also retards rotation of the turbine/compressor 11a by performing regenerative power generation. Thus, the rotation control (supercharge pressure control) of the turbine/compressor 11a performed by the electric motor 11b has a wide control width. During a state where the electric motor 11b is not driven and is not performing the regenerative power generation (not connected to the battery 22), the turbine/compressor 11a is rotated only by exhaust energy. In that case, the electric motor 11b does not retard rotation of the turbine/compressor 11a (the cogging torque is ignorably small).

The supercharge pressure control involving regenerative power generation which is executed when a sharp deceleration operation is performed during execution of the above-described basic supercharge pressure control will be described below.

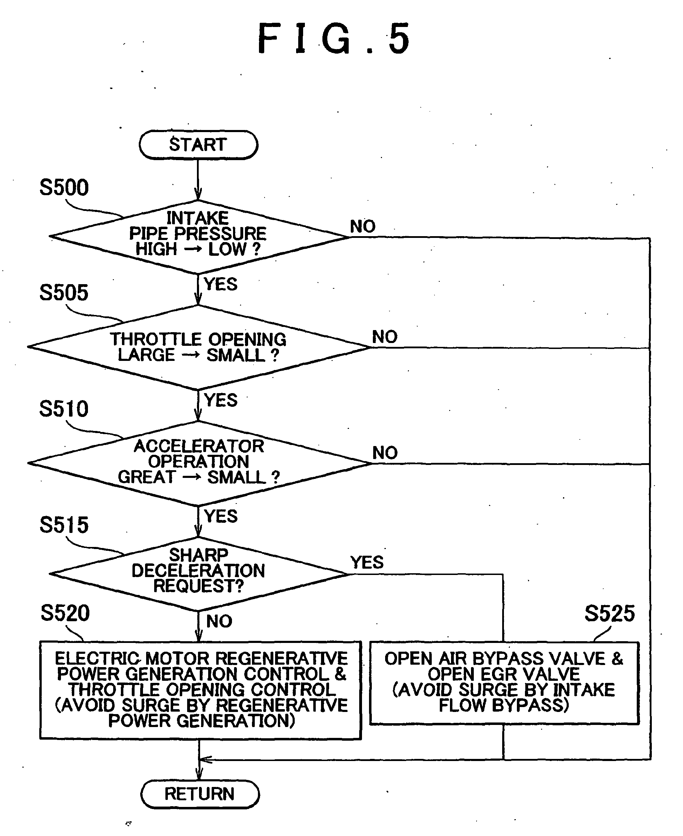

As for the conventional turbochargers, generally termed surge may occur if the throttle valve is closed during deceleration. This surge is avoided by opening the air bypass valve 28 according to the conventional technology. In this embodiment, however, the surge is avoided by causing the electric motor 11b to perform regenerative power generation and therefore retarding rotation of the turbine/compressor 11a. Since regenerative power generation is performed as well, recovery of electric energy can be achieved in addition to the avoidance of the surge. The control described herein is illustrated in the flowchart of FIG 5.

First, it is determined whether the intake pipe pressure detected by the pressure sensor 19 has changed from a higher side to a lower side (step 500). If the determination is affirmatively made in step 500, it is subsequently determined whether the degree of throttle opening detected by the throttle positioning sensor 18 has changed from a larger side to a smaller side (step 505). If the determination is affirmatively made in step 505, it is subsequently determined whether the amount of accelerator operation detected by the accelerator positioning sensor 15 has changed from a larger side to a smaller side (step 510). If the determination is affirmatively made in step 510, that is, if all the conditions of steps 500, 505 and 510 are met, there is a possibility of occurrence of a surge during a decelerating state, and therefore a surge avoiding operation is needed.

If a negative determination is made in any one of steps 500 to 510, the flow illustrated in FIG. 5 is temporarily exited. It is determined that the surge avoiding operation is needed, only when an affirmative determination is made in each of the conditions of steps 500 to 510. In this case, it is subsequently determined whether the present decelerating state is a normal deceleration state or a sharp deceleration state (step 515). Specifically, in step 515, it is determined whether the change in the amount of accelerator operation toward the closed side is great, whether the change in the amount of depression of the brake pedal toward the depressed side is great, etc. If the determination at step 515 is negatively made, the present operation state is not a sharp deceleration state, and therefore, the electric motor 11b is caused to perform regenerative power generation, so that rotation of the turbine/compressor 11 a is retarded and a surge is avoided (step 520).

In step 520, the degree of opening of the throttle valve 13 is also controlled in addition to the retardation of rotation of the turbine/compressor 11a caused by regenerative power generation of the electric motor 11b. Since the throttle valve 13 in this embodiment is of an electronically controlled type, the degree of opening of the throttle valve 13 can be controlled by the ECU 16. In this embodiment, rotation of the turbine/compressor 11a is sharply reduced by regenerative power generation, and the throttle valve 13 is not rapidly closed, but is gradually closed (the throttle valve 13, positioned to the closed side in step 505, is closed more slowly during a sharp deceleration). This manner of operation increases the amount of electric power recovered by regenerative power generation.

Depending on situations, a surge can be avoided only through retardation of rotation of the turbine/compressor 11a caused by regenerative power generation, without closing the throttle valve 13. In such a case, acceleration from the decelerated state can be achieved merely by switching the electric motor 11b from the regenerative power generation mode to the rotation drive mode. Thus, high output can be quickly produced with a good response. If the determination at step 515 is affirmatively made, the present operation state is a sharp deceleration state, and therefore, there is a possibility that the regenerative power generation of the electric motor 11b may be insufficient to avoid a surge. In that case, a surge avoiding operation of closing the throttle valve 13 exactly at a speed intended by a driving person, and bypassing exhaust flow to the turbocharger unit.

In this step, a surge is avoided by opening the air bypass valve 28 (so that pressure downstream of the compressor is released), by opening the EGR valve 25 (so that exhaust flow is returned to the intake side), etc. These surge avoiding operations are operations that are performed in ordinary turbocharger systems. Due to these operations, the frequency of execution of regenerative power generation of the electric motor 11b is increased, except when the vehicle is sharply decelerated. Thus, electric energy recovery is increased.

The release of pressure downstream of the compressor may be realized by returning the downstream-side pressure via the bypass 27 and the air bypass valve 28, and may also be realized by simply releasing it to the atmosphere via an intake relief valve or the like. However, since the atmospheric release includes a possibility of producing noise, the use of the bypass 27 or the air bypass valve 28 is more preferable. If the EGR valve 25 is opened to avoid a surge, it is necessary that the throttle valve 13 be open. Furthermore, regenerative power generation by the electric motor 11b may be performed, at the time of a surge avoiding operation after a sharp deceleration state is determined (i.e., simultaneously with the opening of the air bypass valve 28). In this case, the regenerative power generation by the electric motor 11b contributes to good energy efficiency although the regenerative power generation does not highly contribute to avoidance of a surge.

The above-described embodiment does not restrict the invention. Although in the embodiment, the supercharge pressure changing means other than the electric motor is the variable nozzle, the supercharge pressure changing means other than the electric motor may also be mechanisms other than the variable nozzle, for example, a means that variably controls an A/R, or the like. The supercharge pressure control means does not need to be formed by a single component part, but may be made up of a plurality of component parts (e.g., an ECU, an actuator, a sensor, etc.).

Still further, in the foregoing embodiment, the turbine-side impellor and the compressor-side impellor are firmly connected by the rotation shaft, and therefore rotate together. However, the invention is also applicable to a turbocharger that has a turbine/compressor in which a clutch is disposed in an intermediate portion of the rotation shaft. In this case, when the supercharge by the electric motor is performed, the compressor-side rotation shaft is rotatable by the electric motor. When regenerative power generation by the electric motor is performed, the turbine-side rotation shaft is connected to the electric motor. Furthermore, an arrangement incorporating a turbine-driving electric motor and a compressor-driving electric motor is also possible.

A turbocharger system of the invention has an electric motor for rotating a turbine/compressor of a turbocharger so as to provide supercharge pressure, supercharge pressure changing means other than the electric motor-equipped compressor, and supercharge pressure changing means for performing a supercharge pressure control by the supercharge pressure changing means with priority over the supercharge pressure control by the first supercharge pressure changing means.

Therefore, in the turbocharger having the electric motor and the supercharge pressure changing means other than the electric motor, the supercharge pressure can be controlled without interference between the control by the electric motor and the control by the other supercharge pressure changing means, thus contributing to improvements in output characteristic and fuel economy.

## Claims

1. A turbocharger system of an internal combustion engine, comprising:
a turbocharger (11),
an electric motor (11b) as first supercharge pressure changing means for rotating a compressor (11a) of the turbocharger (11) for performing a supercharge pressure control,
second supercharge pressure changing means for performing a supercharge pressure control independent of the first supercharge pressure changing means, and
supercharge pressure control means (16) for performing the supercharge pressure control by the second supercharge pressure changing means with a priority over the supercharge pressure control by the first supercharge pressure changing means,
wherein said first supercharge pressure changing means (S235) and said second supercharge pressure changing means (S205) control the supercharge pressure based on comparison of an actual supercharge pressure with a target supercharge pressure,
**characterized in that**
said supercharge pressure control means performs an operation region determination as to whether:
a operation state of the engine (1) is in a specific operation region, so that the supercharge pressure control by the first supercharge pressure changing means is to be performed in addition to the supercharge pressure control by the second supercharge pressure changing means; or
the operation state of the engine (1) is outside the specific operation region, so that only the supercharge pressure control by the second supercharge pressure changing means is to be performed, and
if it is determined that the operation state of the engine (1) is outside the specific operation region, the supercharge pressure control means prohibits the supercharge pressure control by the first supercharge pressure changing means.

2. The turbocharger system according to claim 1, wherein
in said operation region determination it is determined, whether a difference between a target supercharge pressure value and an actually-measured supercharge pressure value actually measured is positive or negative, and
if the difference between the target supercharge pressure and the actually-measured supercharge pressure value is positive, the supercharge pressure control by the first supercharge pressure changing means is performed in addition to the supercharge pressure control by the second supercharge pressure changing means, and
if the difference between the target supercharge pressure and the actually-measured supercharge pressure value is negative, only the supercharge pressure control by the second supercharge pressure changing means is performed, and the electric motor (11b) is prohibited from being driven.

3. The turbocharger system according to claim 2, **characterized in that** the target supercharge pressure is calculated by adding a base target supercharge pressure value which is calculated from an engine rotation speed and an engine load estimated from an amount of intake air and a degree of throttle opening and which is a supercharge pressure value that occurs during a steady operation, to a change supercharge pressure value determined from a pre-set value, based on the engine rotation speed and an amount of accelerator operation.

4. The turbocharger system according to claim 3, **characterized in that** the supercharge pressure control means calculates the change supercharge pressure value after performing an operation region determination as to whether an operation state of the engine (1) is included in a specific operation region, based on the engine rotation speed and the amount of accelerator operation.

5. The turbocharger system according to claim 4, **characterized in that** the specific operation region is a case where the operation state of the engine (1) is a sharp acceleration state in the operation region determination.

6. The turbocharger system according to any one of the preceding claims, **characterized in that** the specific operation region is a state where the engine rotation speed is at most a predetermined rotation speed and the amount of accelerator operation is at least a predetermined amount.

7. The turbocharger system according to any one of claims 3 to 6, **characterized in that** if it is determined in the operation region determination that the operation state of the engine (1) is not included in the specific operation region, the supercharge pressure control means calculates the change supercharge pressure value as a negative value.

8. The turbocharger system according to any one of claims 2 to 7, **characterized in that** the second supercharge pressure changing means is a flow changing mechanism of turbine nozzle means.

9. The turbocharger system according to any one of claims 2 to 8, **characterized in that** the supercharge pressure control means performs a surge avoiding operation for avoiding a surge by delaying a closing operation of a throttle valve (13) and causing the electric motor (11b) to perform regenerative power generation.

10. The turbocharger system according to any one of the claims 2 to 9, **characterized in that** the supercharge pressure control means determines whether a rate of change in intake pipe pressure, degree of throttle opening, amount of accelerator operation or engine rotation speed is smaller than a predetermined rate of decrease, and that if the rate of change is smaller than the predetermined rate of decrease, the supercharge pressure control means performs the surge avoiding operation.

11. The turbocharger system according to claim 10, **characterized in that** if it is determined that the rate of change is greater than the predetermined rate of decrease, and a sharp deceleration operation is performed, the supercharge pressure control means performs the surge avoiding operation by releasing pressure downstream of the compressor (11a) of the turbocharger (11).

12. A supercharge pressure control method in a turbocharger system of an internal combustion engine,
wherein the turbocharger system comprises an electric motor (11b) for rotating a compressor (11a) of a turbocharger (11), wherein said method comprises the steps of;
performing a supercharge pressure control based on rotation of the compressor (11a) by the electric motor as first supercharge pressure changing means; and
performing a supercharge pressure control independent of the first supercharge pressure changing means by a second supercharge pressure changing means,
wherein said first supercharge pressure changing means and said second supercharge pressure changing means control the supercharge pressure based on comparison of an actual supercharge pressure with a target supercharge pressure, and
the supercharge pressure control by the second supercharge pressure changing means is performed with a priority over the supercharge pressure control by the first supercharge pressure changing means,
the method being **characterized by**
determining whether a difference between a target supercharge pressure value and an actually-measured supercharge pressure value actually measured is positive or negative, and
if the difference between the target supercharge pressure and the actually-measured supercharge pressure value is positive, the supercharge pressure control by the first supercharge pressure changing means is performed in addition to the supercharge pressure control by the second supercharge pressure changing means, and
if the difference between the target supercharge pressure and the actually-measured supercharge pressure value is negative, only the supercharge pressure control by the second supercharge pressure changing means is performed, and the electric motor (11b) is prohibited from being driven.

13. The supercharge pressure control method according to claim 12, **characterized by** the step of performing a surge avoiding operation for avoiding a surge is performed by delaying a closing operation of a throttle valve (13) and causing the electric motor (11b) to perform regenerative power generation.

## Patentansprüche

1. Turboladersystem einer Brennkraftmaschine mit:
einem Turbolader (11),
einem Elektromotor (11b) als eine erste Ladedruckveränderungseinrichtung zum Drehen eines Kompressors (11a) des Turboladers (11) zum Durchführen einer Ladedrucksteuerung,
einer zweiten Ladedruckveränderungseinrichtung zum Durchführen einer Ladedrucksteuerung unabhängig von der ersten Ladedruckveränderungseinrichtung, und
einer Ladedrucksteuerungseinrichtung (16) zum Durchführen der Ladedrucksteuerung durch die zweite Ladedruckveränderungseinrichtung mit einer Priorität gegenüber der Ladedrucksteuerung durch die erste Ladedruckveränderungseinrichtung,
wobei die erste Ladedruckveränderungseinrichtung (S235) und die zweite Ladedruckveränderungseinrichtung (S205) den Ladedruck basierend auf einem Vergleich eines Ist-Ladedrucks mit einem Ziel-Ladedruck steuern,
**dadurch gekennzeichnet, dass**
die Ladedrucksteuerungseinrichtung eine Betriebsbereichsbestimmung darüber durchführt, ob:
sich ein Betriebszustand der Maschine (1) in einem bestimmten Betriebsbereich befindet, so dass die Ladedrucksteuerung durch die erste Ladedruckveränderungseinrichtung zusätzlich zu der Ladedrucksteuerung durch die zweite Ladedruckveränderungseinrichtung durchzuführen ist, oder
sich der Betriebszustand der Maschine (1) außerhalb des bestimmten Betriebsbereichs befindet, so dass nur die Ladedrucksteuerung durch die zweite Ladedruckveränderungseinrichtung durchzuführen ist, und
wenn bestimmt wird, dass sich der Betriebszustand der Maschine (1) außerhalb des bestimmten Betriebsbereichs befindet, die Ladedrucksteuerungseinrichtung die Ladedrucksteuerung durch die erste Ladedruckveränderungseinrichtung verhindert.

2. Turboladersystem gemäß Anspruch 1, wobei
bei der Betriebsbereichsbestimmung bestimmt wird, ob eine Differenz zwischen einem Ziel-Ladedruckwert und einem tatsächlichen gemessenen Ladedruckwert, der tatsächlich gemessen wurde, positiv oder negativ ist, und
wenn die Differenz zwischen dem Ziel-Ladedruck und dem tatsächlich gemessenen Ladedruckwert positiv ist, die Ladedrucksteuerung durch die erste Ladedruckveränderungseinrichtung zusätzlich zu der Ladedrucksteuerung durch die zweite Ladedruckveränderungseinrichtung durchgeführt wird, und
wenn die Differenz zwischen dem Ziel-Ladedruck und dem tatsächlich gemessenen Ladedruckwert negativ ist, nur die Ladedrucksteuerung durch die zweite Ladedruckveränderungseinrichtung durchgeführt wird und verhindert wird, dass der Elektromotor (11b) angetrieben wird.

3. Turboladersystem gemäß Anspruch 2, **dadurch gekennzeichnet, dass** der Ziel-Ladedruck durch Addieren eines Basis-Ziel-Ladedruckwerts, der aus einer Maschinendrehzahl und einer Maschinenlast berechnet wird, die aus einer Menge von Ansaugluft und einem Maß einer Drosselöffnung abgeschätzt wird, und der ein Ladedruckwert ist, der während eines stationären Betriebs auftritt, zu einem Veränderungs-Ladedruckwert berechnet wird, der aus einem voreingestellten Wert bestimmt wird, und der auf der Maschinendrehzahl und einem Betrag der Gaspedalbetätigung basiert.

4. Turboladersystem gemäß Anspruch 3, **dadurch gekennzeichnet, dass** die Ladedrucksteuerungseinrichtung den Veränderungs-Ladedruckwert nach einem Durchführen einer Betriebsbereichbestimmung darüber, ob sich ein Betriebszustand der Maschine (1) in einem bestimmten Betriebsbereich befindet, basierend auf der Maschinendrehzahl und dem Betrag einer Gaspedalbetätigung berechnet.

5. Turboladersystem gemäß Anspruch 4, **dadurch gekennzeichnet, dass** der bestimmte Betriebsbereich in der Betriebsbereichsbestimmung ein Fall ist, in dem der Betriebszustand der Maschine (1) ein Zustand einer starken Beschleunigung ist.

6. Turboladersystem gemäß einem der vorangehenden Ansprüche, **dadurch gekennzeichnet, dass** der bestimmte Betriebsbereich ein Zustand ist, in dem die Maschinendrehzahl höchstens eine vorbestimmte Drehzahl ist und der Gaspedalbetätigungsbetrag mindestens ein vorbestimmter Betrag ist.

7. Turboladersystem gemäß einem der Ansprüche 3 bis 6, **dadurch gekennzeichnet, dass** dann, wenn bei der Betriebsbereichbestimmung bestimmt wird, dass sich der Betriebszustand der Maschine (1) nicht in dem bestimmten Betriebsbereich befindet, die Ladedrucksteuerungseinrichtung den Veränderungs-Ladedruckwert als einen negativen Wert berechnet.

8. Turboladersystem gemäß einem der Ansprüche 2 bis 7, **dadurch gekennzeichnet, dass** die zweite Ladedruckveränderungseinrichtung ein Strömungsveränderungsmechanismus einer Turbinendüseneinrichtung ist.

9. Turboladersystem gemäß einem der Ansprüche 2 bis 8, **dadurch gekennzeichnet, dass** die Ladedrucksteuerungseinrichtung einen Druckwellenvermeidungsvorgang zum Vermeiden einer Druckwelle durchführt, indem ein Schließvorgang eines Drosselventils (13) verzögert wird und der Elektromotor (11) dazu gebracht wird, eine Regenerationsenergieerzeugung durchzuführen.

10. Turboladersystem gemäß einem der Ansprüche 2 bis 9, **dadurch gekennzeichnet, dass** die Ladedrucksteuerungseinrichtung bestimmt, ob eine Änderungsrate eines Ansaugleitungsdrucks, ein Grad einer Drosselöffnung, ein Betrag einer Gaspedalbetätigung oder eine Maschinendrehzahl geringer als eine vorbestimmte Verringerungsrate ist, und dass, wenn die Änderungsrate geringer als die vorbestimmte Verringerungsrate ist, die Ladedrucksteuerungseinrichtung den Druckwellenvermeidungsvorgang durchführt.

11. Turboladersystem gemäß Anspruch 10, **dadurch gekennzeichnet, dass** dann, wenn bestimmt wird, dass die Änderungsrate größer als die vorbestimmte Verringerungsrate ist, und ein Vorgang einer starken Verlangsamung durchgeführt wird, die Ladedrucksteuerungseinrichtung den Druckwellenvermeidungsvorgang durchführt, indem ein Druck stromabwärtig des Kompressors (11a) des Turboladers (11) freigesetzt wird.

12. Ladedrucksteuerverfahren in einem Turboladersystem einer Brennkraftmaschine, wobei das Turboladersystem einen Elektromotor (11b) zum Drehen eines Kompressors (11a) eines Turboladers (11) hat, wobei das Verfahren die folgenden Schritte aufweist:
Durchführen einer Ladedrucksteuerung basierend auf einer Drehung des Kompressors (11a) durch den Elektromotor als erste Ladedruckveränderungseinrichtung; und
Durchführen einer Ladedrucksteuerung unabhängig von der ersten Ladedruckveränderungseinrichtung durch eine zweite Ladedruckveränderungseinrichtung, wobei
die erste Ladedruckveränderungseinrichtung und die zweite Ladedruckveränderungseinrichtung den Ladedruck basierend auf einem Vergleich eines Ist-Ladedrucks mit einem Ziel-Ladedruck steuert, und
die Ladedrucksteuerung durch die zweite Ladedruckveränderungseinrichtung mit einer Priorität gegenüber der Ladedrucksteuerung durch die erste Ladedruckveränderungseinrichtung durchgeführt wird,
wobei das Verfahren
**gekennzeichnet ist durch**
Bestimmen, ob eine Differenz zwischen einem Ziel-Ladedruckwert und einem tatsächlich gemessenen Ladedruckwert, der tatsächlich gemessen wird, positiv oder negativ ist, und
wenn die Differenz zwischen dem Ziel-Ladedruck und dem tatsächlich gemessenen Ladedruckwert positiv ist, die Ladedrucksteuerung **durch** die erste Ladedruckveränderungseinrichtung zusätzlich zu der Ladedrucksteuerung **durch** die zweite Ladedruckveränderungseinrichtung durchgeführt wird, und
wenn die Differenz zwischen dem Ziel-Ladedruck und dem tatsächlich gemessenen Ladedruckwert negativ ist, nur die Ladedrucksteuerung **durch** die zweite Ladedruckveränderungseinrichtung durchgeführt wird und verhindert wird, dass der Elektromotor (11b) angetrieben wird.

13. Steuerverfahren gemäß Anspruch 12, **dadurch gekennzeichnet, dass** der Schritt des Durchführens eines Druckwellenvermeidungsvorgangs zum Vermeiden einer Druckwelle durchgeführt wird, indem ein Schließvorgang eines Drosselventils (13) verzögert wird und der Elektromotor (11b) dazu gebracht wird, eine Regenerationsenergieerzeugung durchzuführen.

## Revendications

1. Système turbocompresseur d'un moteur à combustion interne, comprenant:
un turbocompresseur (11),
un moteur électrique (11b) en tant que premier moyen de changement de pression de suralimentation pour mettre en rotation un compresseur (1 la) du turbocompresseur (11) pour effectuer une commande de pression de suralimentation,
un deuxième moyen de changement de pression de suralimentation pour effectuer une commande de pression de suralimentation indépendante du premier moyen de changement de pression de suralimentation, et
un moyen de commande de pression de suralimentation (16) pour effectuer la commande de pression de suralimentation par le deuxième moyen de changement de pression de suralimentation avec une priorité sur la commande de pression de suralimentation par le premier moyen de changement de pression de suralimentation,
dans lequel ledit premier moyen de changement de pression de suralimentation (S235) et ledit deuxième moyen de changement de pression de suralimentation (S205) commandent la pression de suralimentation sur la base d'une comparaison d'une pression de suralimentation effective à une pression de suralimentation cible,
**caractérisé en ce que**
ledit moyen de commande de pression de suralimentation effectue une détermination de région de fonctionnement consistant à savoir si:
un état de fonctionnement du moteur (1) est dans une région de fonctionnement spécifique, de sorte que la commande de pression de suralimentation par le premier moyen de changement de pression de suralimentation doit être effectuée en plus de la commande de pression de suralimentation par le deuxième moyen de changement de pression de suralimentation; où
l'état de fonctionnement du moteur (1) est en dehors de la région de fonctionnement spécifique, de sorte que seule la commande de pression de suralimentation par le deuxième moyen de changement de pression de suralimentation doit être effectuée, et
s'il est déterminé que l'état de fonctionnement du moteur (1) est en dehors de la région de fonctionnement spécifique, le moyen de commande de pression de suralimentation interdit la commande de pression de suralimentation par le premier moyen de changement de pression de suralimentation.

2. Système turbocompresseur selon la revendication 1, dans lequel
dans ladite détermination de région de fonctionnement il est déterminé, si une différence entre une valeur de pression de suralimentation cible et une valeur de pression de suralimentation effectivement mesurée qui est effectivement mesurée est positive ou négative, et
si la différence entre la pression de suralimentation cible et la valeur de pression de suralimentation effectivement mesurée est positive, la commande de pression de suralimentation par le premier moyen de changement de pression de suralimentation est effectuée en plus de la commande de pression de suralimentation par le deuxième moyen de changement de pression de suralimentation, et
si la différence entre la pression de suralimentation cible et la valeur de pression de suralimentation effectivement mesurée est négative, seule la commande de pression de suralimentation par le deuxième moyen de changement de pression de suralimentation est effectuée, et on interdit l'entraînement du moteur électrique (11b).

3. Système turbocompresseur selon la revendication 2, **caractérisé en ce que** la pression de suralimentation cible est calculée en ajoutant une valeur de pression de suralimentation cible de base qui est calculée d'après une vitesse de rotation de moteur et une charge de moteur estimée d'après une quantité d'air d'admission et un degré d'ouverture du papillon des gaz et qui est une valeur de pression de suralimentation qui se produit pendant un fonctionnement stable, à une valeur de changement de pression de suralimentation déterminée d'après une valeur préétablie, sur la base de la vitesse de rotation de moteur et d'une quantité d'actionnement de l'accélérateur.

4. Système turbocompresseur selon la revendication 3, **caractérisé en ce que** le moyen de commande de pression de suralimentation calcule la valeur de changement de pression de suralimentation après avoir effectué une détermination de région de fonctionnement pour savoir si un état de fonctionnement du moteur (14) est inclus dans une région de fonctionnement spécifique, sur la base de la vitesse de rotation de moteur et de la quantité d'actionnement de l'accélérateur.

5. Système turbocompresseur selon la revendication 4, **caractérisé en ce que** la région de fonctionnement spécifique est un cas où l'état de fonctionnement du moteur (1) est un état d'accélération vive dans la détermination de région de fonctionnement.

6. Système turbocompresseur selon l'une quelconque des revendications précédentes, **caractérisé en ce que** la région de fonctionnement spécifique est un état où la vitesse de rotation de moteur est au plus une vitesse de rotation prédéterminée et la quantité d'actionnement de l'accélérateur est au moins une quantité prédéterminée.

7. Système turbocompresseur selon l'une quelconque des revendications 3 à 6, **caractérisé en ce que** s'il est déterminé dans la détermination de région de fonctionnement que l'état de fonctionnement du moteur (1) n'est pas inclus dans la région de fonctionnement spécifique, le moyen de commande de pression de suralimentation calcule la valeur de changement de pression de suralimentation comme étant une valeur négative.

8. Système turbocompresseur selon l'une quelconque des revendications 2 à 7, **caractérisé en ce que** le deuxième moyen de changement de pression de suralimentation est un mécanisme de changement de débit d'un moyen de tuyère de turbine.

9. Système turbocompresseur selon l'une quelconque des revendications 2 à 8, **caractérisé en ce que** le moyen de commande de pression de suralimentation effectue une opération d'évitement de surpression pour éviter une pointe de pression en retardant une opération de fermeture d'un papillon des gaz (13) et amenant le moteur électrique (11b) à effectuer une génération de puissance régénératrice.

10. Système turbocompresseur selon l'une quelconque des revendications 2 à 9, **caractérisé en ce que** le moyen de commande de pression de suralimentation détermine si un taux de changement d'une pression de tuyau d'admission, un degré d'ouverture de papillon des gaz, une quantité d'actionnement de l'accélérateur ou une vitesse de rotation de moteur est plus petit qu'un taux prédéterminé de diminution, et que si le taux de changement est plus petit que le taux prédéterminé de diminution, le moyen de commande de pression de suralimentation effectue l'opération d'évitement de pointe de pression.

11. Système turbocompresseur selon la revendication 10, **caractérisé en ce que** s'il est déterminé que le taux de changement est plus grand que le taux prédéterminé de diminution, et une opération de décélération vive est effectuée, le moyen de commande de pression de suralimentation effectue l'opération d'évitement de pointe de pression en relâchant la pression en aval du compresseur (11a) du turbocompresseur (11).

12. Procédé de commande de pression de suralimentation dans un système turbocompresseur d'un moteur à combustion interne, dans lequel le système turbocompresseur comprend un moteur électrique (11b) pour mettre en rotation un compresseur (11a) d'un turbocompresseur (11), où ledit procédé comprend les étapes de;
effectuer une commande de pression de suralimentation sur la base de la rotation du compresseur (11a) par le moteur électrique comme étant un premier moyen de changement de pression de suralimentation; et
effectuer une commande de pression de suralimentation indépendante du premier moyen de changement de pression de suralimentation par un deuxième moyen de changement de pression de suralimentation,
où ledit premier moyen de changement de pression de suralimentation et ledit deuxième moyen de changement de pression de suralimentation commandent la pression de suralimentation sur la base d'une comparaison d'une pression de suralimentation effective à une pression de suralimentation cible, et
la commande de pression de suralimentation par le deuxième moyen de changement de pression de suralimentation est effectuée avec une priorité sur la commande de pression de suralimentation par le premier moyen de changement de pression de suralimentation,
le procédé étant **caractérisé par**
déterminer si une différence entre une valeur de pression de suralimentation cible et une valeur de pression de suralimentation effectivement mesurée qui est effectivement mesuré est positive ou négative, et
si la différence entre la pression de suralimentation cible et la valeur de pression de suralimentation effectivement mesurée est positive, la commande de pression de suralimentation par le premier moyen de changement de pression de suralimentation est effectuée en plus de la commande de pression de suralimentation par le deuxième moyen de changement de pression de suralimentation, et
si la différence entre la pression de suralimentation cible et la valeur de pression de suralimentation effectivement mesurée est négative, seule la commande de pression de suralimentation par le deuxième moyen de changement de pression de suralimentation est effectuée, et on interdit l'entraînement du moteur électrique (11b).

13. Procédé de commande de pression de suralimentation selon la revendication 12, **caractérisé par** l'étape consistant à effectuer une opération d'évitement de pointe de pression pour éviter une pointe de pression est effectuée en retardant une opération de fermeture d'un papillon des gaz (13) et en amenant le moteur électrique (11b) à effectuer une génération de puissance régénératrice.
